# EUROPÄISCHE PATENTSCHRIFT

(11) **EP 2 885 667 B1**
(45) Veröffentlichungstag und Bekanntmachung des Hinweises auf die Patenterteilung: **18.06.2025**
(21) Anmeldenummer: 13750277.9
(22) Anmeldetag: 02.08.2013
(51) Int. Cl.: G01K 11/3206, G01L 1/24, G02B 6/132, G02B 6/122, G02B 6/12, G02B 6/293

(54) **PLANAROPTISCHES ELEMENT, SENSORELEMENT UND VERFAHREN ZU DESSEN HERSTELLUNG**
OPTICAL ELEMENT, SENSOR ELEMENT AND METHOD FOR THE PRODUCTION THEREOF
ÉLÉMENT OPTIQUE PLAN, ÉLÉMENT DE DÉTECTION ET PROCÉDÉ DE PRODUCTION CORRESPONDANT

(30) Priorität: 14.08.2012 DE 102012214440
(43) Veröffentlichungstag der Anmeldung: 24.06.2015
(73) Patentinhaber: Fraunhofer-Gesellschaft zur Förderung der angewandten Forschung e.V., 80686 München (DE)
(72) Erfinder: SCHADE, Wolfgang, 38644 Goslar (DE)
(86) Internationale Anmeldenummer: PCT/EP2013/066313
(87) Internationale Veröffentlichungsnummer: WO 2014/026867

(56) Entgegenhaltungen:
- EP-A1- 1 072 908
- EP-A2- 1 886 802
- WO-A2-2006/014582
- WO-A2-2012/098159
- WO-A2-2012/098159
- DE-A1- 4 130 550
- JP-A- 2003 156 643
- JP-A- 2003 156 643
- JP-A- 2006 208 982
- JP-A- 2006 208 982
- JP-A- 2009 020 425
- JP-A- 2009 086 138
- JP-A- H11 109 155
- US-A1- 2003 031 438
- ION SANDU ET AL: "Synthesis of optical transparent and electrical conductive polymer/nanocarbon composite by infiltration method", THIN SOLID FILMS, ELSEVIER, AMSTERDAM, NL, vol. 519, no. 12, 1 April 2011 (2011-04-01), pages 4128 - 4131, XP002715935, ISSN: 0040-6090, [retrieved on 20110202], DOI: 10.1016/J.TSF.2011.01.361
- NANTAO HU ET AL: "Efficient dispersion of multi-walled carbon nanotubes by in situ polymerization", POLYMER INTERNATIONAL, BARKING, GB, vol. 56, no. 5, 1 May 2007 (2007-05-01), pages 655 - 659, XP002715934, ISSN: 0959-8103, [retrieved on 20061229], DOI: 10.1002/PI.2187
- ION SANDU ET AL: "Synthesis of optical transparent and electrical conductive polymer/nanocarbon composite by infiltration method", THIN SOLID FILMS, ELSEVIER, AMSTERDAM, NL, vol. 519, no. 12, 1 April 2011 (2011-04-01), pages 4128 - 4131, XP002715935, ISSN: 0040-6090, [retrieved on 20110202], DOI: 10.1016/J.TSF.2011.01.361
- NANTAO HU ET AL: "Efficient dispersion of multi-walled carbon nanotubes by in situ polymerization", POLYMER INTERNATIONAL, BARKING, GB, vol. 56, no. 5, 1 May 2007 (2007-05-01), pages 655 - 659, XP002715934, ISSN: 0959-8103, [retrieved on 20061229], DOI: 10.1002/PI.2187
- HU ET AL.: "Efficient dispersion of multi-walled carbon nanotubes by in situ polymerization", POLYMER INTERNATIONAL, vol. 56, 29 December 2006 (2006-12-29), pages 655 - 659, XP002715934
- SANDU ET AL.: "Synthesis of optical transparent and electrical conductive polymer/nanocarbon composite by infiltration metod", THIN SOLID FILMS, vol. 519, 2 February 2011 (2011-02-02), pages 4128 - 4131, XP002715935

## Beschreibung

Die Erfindung betrifft ein planaroptisches Element mit zumindest einer photonischen Komponente, welche in zumindest einem Träger angeordnet ist, welcher zumindest ein Polymer enthält oder daraus besteht. Weiterhin betrifft die Erfindung ein Verfahren zur Herstellung eines solchen planaroptischen Elementes.

Aus der WO 2011/089244 A2 ist bekannt, einen faseroptischen Sensor mit einer Mehrzahl von Faser-Bragg-Gittern zur Erfassung von Temperaturen und/oder mechanischen Spannungen einzusetzen. Das von den Faser-Bragg-Gittern reflektierte Licht wird über ein Spektrometer nachgewiesen, wobei dieses Spektrometer als planaroptisches Filterelement auf einem Silizium-Substrat angeordnet sein kann. Nachteilig ist jedoch der große Aufwand bei der Herstellung des planaroptischen Filterelementes auf einem Silizium-Substrat.

In der DE 41 30 550 A1 werden optische Elemente mit einer geprägten Oberflächenstruktur beschrieben, bei denen die geprägte Oberfläche aus einem transparenten Kompositmaterial besteht, das in einer Polymermatrix ein dreidimensionales Gerüst aus anorganischen oder organisch-modifizierten anorganischen Komponenten in Form von nanoskaligen Partikeln aufweist.

Die WO 2006/014582 A2 offenbart eine optische Verbindungmit einem Polymerwellenleiter. Der Kern enthält ein Polymermaterial mit einem Nanopartikel-Füllstoff mit einer Partikelgröße von weniger als einem Zehntel der kürzesten Wellenlänge, die für die optische Verbindung von Bedeutung ist.

Die EP 1 886 802 A2 zeigt ein optisches Gerät, das aus einer Mischung oder einem Verbundwerkstoff aus Polymer-anorganischen Partikeln besteht. Die anorganischen Partikel können phosphoreszierend sein, nichtlineare optische Eigenschaften aufweisen oder piezoelektrische Eigenschaften besitzen.

Aus der US 2003/0031438 sind Mischungen aus Polymeren und anorganischen Partikeln bekannt. Die Partikel werden in Strukturen eingearbeitet, die im Allgemeinen Schnittstellen mit zusätzlichen Materialien aufweisen, die sich vorteilhaft zur Herstellung gewünschter Geräte verwenden lassen. In einigen Ausführungsformen sind die Strukturen optische Strukturen und die Schnittstellen optische Schnittstellen.

Die JP H 11109155 (A) offenbart Kohlefaserplatten mit kleinen Wärmeausdehnungskoeffizienten. Diese werden dicht auf den Oberflächen eines optischen Wellenleiters angeordnet. Da die Kontraktion der optischen Wellenleiter durch Temperaturänderung minimiert wird, kann die Temperaturänderung der optischen Weglänge der optischen Wellenleiter unterdrückt werden.

Aus der Offenlegungsschrift JP 2006-208982 (A) ist ein optischer Wellenleiterfilm mit geringer Wärmeausdehnung bekannt. Dieser weist eine transparente Basisplatte auf, die aus einem faserverstärkten Verbundwerkstoff besteht, der Fasern mit einem durchschnittlichen Durchmesser von 4 bis 200 nm und ein Matrixmaterial enthält.

Ausgehend von diesem Stand der Technik liegt der Erfindung daher die Aufgabe zugrunde, ein planaroptisches Filterelement anzugeben, welches in großen Stückzahlen kostengünstig und einfach herstellbar ist und einfach in weitere Komponenten bzw. Bauteile integrierbar ist.

Die Aufgabe wird erfindungsgemäß durch ein planaroptisches Element gemäß Anspruch 1, und ein Verfahren gemäß Anspruch 8 gelöst.

Erfindungsgemäß wird vorgeschlagen, zumindest eine photonische Komponente auf einem Träger bzw. einem Substrat zu integrieren. Die photonische Komponente kann beispielsweise eine passive optische Komponente sein. In einigen Ausführungsformen der Erfindung kann die passive optische Komponente ausgewählt sein aus einem Wellenleiter, einem Faser-Bragg-Gitter, einem Koppler oder einem Arrayed-Waveguide-Grating. Das planaroptische Element bzw. das vorgeschlagene Sensorelement enthält zumindest eine solche photonische Komponente. In einigen Ausführungsformen der Erfindung können auch mehrere photonische Komponenten auf dem Träger integriert sein, sodass sich eine integrierte photonische Komponente ergibt, welche eine Vielzahl von Funktionen oder zumindest eine komplexe Funktion ausführen kann. In einigen Ausführungsformen der Erfindung kann die photonische Komponente ein Spektrometer für mehrere Kanäle sein, sodass die Intensität eintreffenden Lichtes in vorgebbaren Spektralbereich bestimmt werden kann. Solche Spektrometer können beispielsweise zur Auslese faseroptischer Sensorik oder zur Signalauslese oder zur Signalerzeugung in der optischen Nachrichtentechnik eingesetzt werden.

Erfindungsgemäß wird nun vorgeschlagen, als Träger ein mehrschichtiges Polymermaterial zu verwenden. Das Polymermaterial kann beispielsweise Polymethylmetacrylat, Polycarbonat und/oder Polyimid enthalten oder daraus bestehen. Der Träger weist eine erste Schicht mit einer ersten Seite und einer gegenüberliegenden zweiten Seite auf sowie zumindest eine zweite Schicht mit einer ersten Seite und einer gegenüberliegenden zweiten Seite. Beide Schichten sind festhaftend miteinander verbunden, beispielsweise durch Kleben, Schweißen oder Laminieren, sodass die erste Seite der zweiten Schicht auf der zweiten Seite der ersten Schicht zu liegen kommt. In der ersten Schicht sind die photonischen Komponenten angeordnet, welche beispielsweise durch ein Druckverfahren, durch photolithografische Strukturierung oder durch Materialmodifikation durch Laserstrahlung erzeugt werden können. Im letzteren Fall kann vorteilhaft eine Materialmodifikation durch Femtosekunden-Laserpulse eingesetzt werden. Um die Verluste durch Lichtstreuung oder -brechung in der ersten Schicht gering zu halten, weist die erste Schicht zumindest in den Teilflächen, in welchen die photonischen Komponenten angeordnet sind, keine Einschlüsse oder Materialinhomogenitäten auf. Dies führt jedoch zu einem größeren thermischen Ausdehnungskoeffizient, so dass eine Temperaturänderung zu einer Größenänderung der photonischen Komponenten führt. Dadurch können sich die optischen Eigenschaften der zumindest einen photonischen Komponente ändern.

Erfindungsgemäß wird nun vorgeschlagen, zur Kompensation der temperaturbedingten Ausdehnung die zweite Schicht des Trägers mit Nanodrähten zu verstärken. Die Nanodrähte können durch Koextrusion, durch laminieren, durch ein Sol-Gel-Verfahren oder andere, hier nicht näher spezifizierte Verfahren, in die zweite Schicht eingebracht werden. Die Nanodrähte können Zugspannungen im Material aufnehmen und diesen entgegenwirken, sodass die Temperaturausdehnung der zweiten Schicht erheblich geringer sein kann als die Temperaturausdehnung der ersten Schicht alleine. In einigen Ausführungsformen der Erfindung kann die zweite Schicht in einigen Temperaturbereichen einen negativen Temperaturkoeffizient aufweisen, d. h. statt einer thermischen Ausdehnung zieht sich die zweite Schicht mit steigender Temperatur zusammen.

Durch den Verbund der ersten Schicht und der zweiten Schicht kann die zweite Schicht die Temperaturausdehnung der ersten Schicht kompensieren oder zumindest reduzieren, sodass die photonischen Komponenten auf dem Träger auch bei Temperaturänderungen in zumindest einem vorgebbaren Temperaturbereich zuverlässig funktionieren.

Auch wenn die vorliegende Beschreibung nur drei Schichten als Bestandteil des Trägers beschreibt, so ist darauf hinzuweisen, dass in einigen Ausführungsformen der Erfindung auch eine größere Anzahl von Schichten vorhanden sein kann. Beispielsweise können mehrere erste Schichten vorgesehen sein, um auf diese Weise eine größere Anzahl photonischer Komponenten übereinander im Träger anzuordnen. In anderen Ausführungsformen der Erfindung kann eine Schicht aus mehreren Schichten zusammengesetzt sein und insoweit ein Mehrschichtsystem bilden. Hierdurch können die Materialeigenschaften der Schicht noch besser an vorgebbare Sollwerte angepasst sein.

In einigen Ausführungsformen der Erfindung kann die zweite Folienlage vollflächig mit Nanodrähten versehen sein, sodass der Träger vollflächig den erforderlichen geringen Temperaturkoeffizienten aufweist.

In anderen Ausführungsformen der der Erfindung kann lediglich eine Teilfläche der zweiten Folienlage mit Nanodrähten versehen sein, sodass sich Flächenbereiche ergeben, in welchen die photonischen Komponenten vor unzulässig großer thermischer Ausdehnung geschützt sind und andere Flächenbereiche des Trägers einen abweichenden, meist größeren Temperaturkoeffizienten, aufweisen.

Erfindungsgemäß können die Nanodrähte Zinkoxid und/oder Titandioxid und/oder Kohlenstoff-Nanoröhrchen enthalten oder daraus bestehen. Diese Materialien sind einerseits dazu geeignet, die gewünschte geringe Temperaturausdehnung des Trägers sicherzustellen und können andererseits leicht in die üblichen Polymermaterialien zur Herstellung des Trägers eingebracht werden.

In einigen Ausführungsformen der Erfindung können die Nanodrähte nasschemisch hergestellt sein. Dies erlaubt eine kostengünstige großtechnische Herstellung der Nanodrähte.

In anderen Ausführungsformen der Erfindung können die Nanodrähte aus einem Plasma erzeugt werden. Durch die sich einstellenden Nicht-Gleichgewichtsbedingungen können damit auch nicht thermodynamisch stabile Materialien zu Nanodrähten verarbeitet werden.

Erfindungsgemäß können die Nanodrähte einen Durchmesser von etwa 100 nm bis etwa 1000 nm aufweisen. Diese Abmessungen haben sich dahin gehend bewährt, dass eine hinreichende Reduktion der thermischen Ausdehnung des Trägers erreicht werden kann und andererseits die Nanodrähte einfach herstellbar und einfach verarbeitbar sind.

In einigen Ausführungsformen der Erfindung kann die erste Folienlage Nanopartikel und/oder Dotierstoffe enthalten. Solche Nanopartikel können zusätzlich oder alternativ zu Dotierstoffen eingesetzt werden, um vorgebbare optische Eigenschaften der ersten Folienlage zu erzielen. In einigen Ausführungsformen der Erfindung können Nanopartikel und/oder Dotierstoffe dazu eingesetzt werden, den Brechungsindex der ersten Folienlage an vorgebbare Werte anzupassen.

In einigen Ausführungsformen der Erfindung kann nur eine Teilfläche der ersten Folienlage bzw. ein Teilvolumen der Folienlage mit Nanopartikeln versehen sein. Dies erlaubt die Anpassung der optischen Eigenschaften des Materials in bestimmten Raumbereichen bzw. für bestimmte photonische Komponenten. Andere photonische Komponenten können dagegen in anderen Flächenbereichen angeordnet sein, welche wiederum andere optische Eigenschaften aufweisen.

In einigen Ausführungsformen der Erfindung kann die erste Folienlage Nanopartikel enthalten, welche Titandioxid und/oder Zinkoxid und/oder Siliziumdioxid enthalten oder daraus bestehen. Es konnte gezeigt werden, dass diese Materialien einerseits leicht herstellbar sind, gut in den Polymermaterialien der ersten Folienlage dispergieren und die optischen Eigenschaften für vorgebbare Wellenlängen bzw. Wellenlängenbereiche günstig beeinflussen.

In einigen Ausführungsformen der Erfindung kann die erste Folienlage Nanopartikel enthalten, welche einen Durchmesser von etwa 10 nm bis etwa 500 nm oder welche einen Durchmesser von etwa 100 nm bis etwa 800 nm aufweisen.

In einigen Ausführungsformen der Erfindung kann das planaroptische Element eine dritten Folienlage mit einer ersten Seite und einer gegenüberliegenden zweiten Seite enthalten, wobei die dritte Folienlage zumindest in einer Teilfläche Nanodrähte enthält. Die erste Seite der dritten Folienlage kann mit der zweiten Seite der zweiten Folienlage vollflächig verbunden sein, beispielsweise durch Verkleben, Verschweißen oder Laminieren. Auf diese Weise ergibt sich in einigen Ausführungsformen der Erfindung eine weiter verbesserte Stabilität und damit eine geringere Beeinflussbarkeit der photonischen Komponenten durch thermische Ausdehnung und/oder das Einwirken von mechanischen Spannungen auf den Träger.

In einigen Ausführungsformen der Erfindung können die Nanodrähte eine vorgebbare Orientierung aufweisen. Eine solche Orientierung kann beispielsweise durch Anlegen eines elektrischen und/oder magnetischen Feldes erreicht werden, sodass sich die Nanodrähte vor dem Erstarren des Polymermaterials entlang einer gewünschten Richtung ausrichten. Die Orientierung der Nanodrähte kann in einigen Ausführungsformen der Erfindung weniger als 20°, weniger als 15°, weniger als 5° oder weniger als 3° von der gewünschten Orientierung abweichen. Hierdurch kann ein Träger bereitgestellt werden, welcher ein anisotropes thermisches Ausdehnungsverhalten zeigt.

In einigen Ausführungsformen der Erfindung kann die Orientierung der Nanodrähte der dritten Folienlage von der Orientierung der Nanodrähte der zweiten Folienlage abweichen. In einigen Ausführungsformen der Erfindung können die Nanodrähte der dritten Folienlage und der zweiten Folienlage in etwa orthogonal zueinander angeordnet sein. Dies erlaubt einen besonders stabilen Träger, welcher nach Art eines Schichtholzes bzw. Sperrholzes unterschiedliches Ausdehnungsverhalten der Schichten verriegelt.

In einigen Ausführungsformen kann das planaroptische Element einen faseroptischen Sensor enthalten, welcher zumindest einen Wellenleiter aufweist, welcher wiederum zumindest einen Kern aus einem ersten Material mit einem ersten Brechungsindex und einem den Kern umgebenden Mantel aus einem zweiten Material mit einem zweiten Brechungsindex aufweist. Auf diese Weise kann eine optische Welle an der Grenzfläche zwischen dem ersten Material und dem zweiten Material totalreflektiert werden, sodass die optische Leistung im Kern geführt wird. Im Kern kann zumindest ein Faser-Bragg-Gitter eingebracht sein. Das Faser-Bragg-Gitter reflektiert einen Teil der eingekoppelten optischen Leistung und transmittiert den anderen Teil. Die Wellenlänge bzw. die Wellenlängenverteilung des reflektierten Lichtes hängt von der Gitterkonstanten des Faser-Bragg-Gitters ab. Die Gitterkonstante wiederum ist definiert durch die ursprünglich bei der Herstellung des Faser-Bragg-Gitters intendierte Gitterkonstante sowie deren Änderung durch thermische Ausdehnung und/oder mechanische Spannung. Somit kann durch Analyse der spektralen Verteilung des reflektierten Lichtes eines von mehreren Faser-Bragg-Gittern selektiert werden sowie die am Ort dieses Faser-Bragg-Gitters herrschende Temperatur und/oder Kraft bestimmt werden.

Durch das Einbringen eines solchen Sensorelementes auf den Träger kann ein Bauteil bereitgestellt werden, welches sowohl das Sensorelement als auch das zur Auslese benötigte Spektrometer integriert. Ein oder mehrere Sensoren können eine größere Fläche abdecken, sodass die flächige Erfassung von Kraft oder Temperatur möglich ist. Zur Anwendung muss der Träger lediglich auf das zu überwachende Bauteil aufgeklebt oder in das zu überwachende Bauteil einlaminiert werden.

Das mit dem Sensor zu versehende Bauteil kann in einigen Ausführungsformen der Erfindung eine Batterie bzw. ein Batteriegehäuse sein. In anderen Ausführungsformen der Erfindung kann das zu überwachende Bauteil eine mechanische Komponente sein, beispielsweise der Flügel einer Windenergieanlage, eine Tragfläche, eine Triebwerksgondel oder ein Rumpfelement eines Flugzeuges, ein Reifen oder ein weiteres, hier nicht genanntes Bauteil aus einem faserverstärkten Kunststoff, einem Thermoplast, einem Duroplast oder einem Gummi. In diese Materialsysteme lässt sich das vorgeschlagene Sensorelement besonders leicht beim Urformen einbetten.

Nachfolgend soll die Erfindung anhand von Figuren ohne Beschränkung des allgemeinen Erfindungsgedankens näher erläutert werden. Dabei zeigt
- Figur 1: ein planaroptisches Element gemäß einer Ausführungsform der Erfindung.
- Figur 2: zeigt ein Sensorelement.
- Figur 3: zeigt ein Batteriegehäuse mit einem Sensorelement.

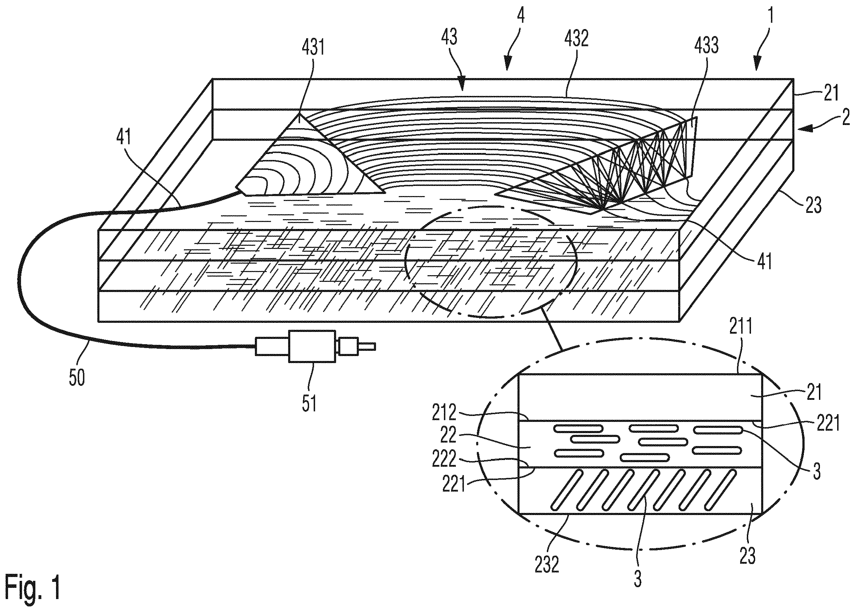

Figur 1 zeigt ein planaroptisches Element 1 gemäß einer Ausführungsform der Erfindung. Im dargestellten Ausführungsbeispiel weist das planaroptische Element 1 einen Träger 2 auf, welcher aus einer ersten Schicht 21, einer zweiten Schicht 22 und einer dritten Schicht 23 zusammengesetzt ist. Die erste Schicht 21, die zweite Schicht 22 und die dritte Schicht 23 enthalten jeweils ein Polymer als Grundwerkstoff. In der ersten Schicht 21 kann darüber hinaus zumindest eine Teilfläche bzw. ein Teilvolumen mit Nanopartikeln versehen sein, welche beispielsweise TiO₂ enthalten. Hierdurch können die optischen Eigenschaften der ersten Schicht 21 beeinflusst werden.

Die zweite Schicht 22 und die dritte Schicht 23 enthalten neben dem Grundwerkstoff Nanodrähte 3. Die Nanodrähte 3 sind in jeder Schicht mit einer Vorzugsrichtung eingebracht, d. h. die Längserstreckungen der einzelnen Nanodrähte 3 verlaufen in etwa parallel zueinander und in etwa parallel zu einer vorgebbaren Wunschrichtung.

Wie der Querschnitt durch den Träger 2 zeigt, bildet die erste Seite 211 der ersten Schicht 21 die Oberfläche des Trägers 2. Die zweite Seite 212 der ersten Schicht 21 kommt auf der ersten Seite 221 der zweiten Schicht 22 zu liegen. Die Grenzfläche kann durch Verschweißen, Verkleben oder Laminieren vollflächig verbunden sein. In gleicher Weise kommt die zweite Seite 222 der zweiten Schicht 22 auf die erste Seite 232 der dritten Schicht 23 zu liegen. Auch an dieser Grenzfläche kann eine vollflächige festhaftende Verbindung vorgesehen sein. Die zweite Seite 223 der dritten Schicht 23 bildet die Unterseite des Trägers 2. Wie im Querschnitt weiterhin angedeutet ist, verlaufen die Längserstreckungen der Nanodrähte 3 in der zweiten Schicht 22 in etwa orthogonal zur Längserstreckung der Nanoröhrchen 3 der dritten Schicht 23. Auf diese Weise ergibt sich eine mechanische Stabilisierung bzw. eine Stabilisierung gegen thermische Ausdehnungen in beiden Raumrichtungen, sodass die photonische Komponente 4 auf dem Träger 2 durch thermische Ausdehnung oder Krafteinwirkung wenig beeinflusst wird.

Die Nanodrähte 3 können vollflächig im Träger 2 angeordnet sein, sodass der gesamte Träger 2 unempfindlich gegen thermische Ausdehnung ist, d. h. die Längen- bzw. Breiten-änderung in Abhängigkeit der Temperatur ist gering. Die erste Schicht 21, die zweite Schicht 22 und die dritte Schicht 23 können jeweils eine Dicke von etwa 25 µm bis etwa 250 µm oder von etwa 50 µm bis etwa 125 µm aufweisen. Zumindest eine der Schichten 21, 22 oder 23 kann durch Extrudieren, Walzen oder nasschemisches Abscheiden erzeugt werden.

Als Beispiel für eine photonische Komponente 4 ist ein Arrayed-Waveguide-Grating 43 dargestellt. Das Arrayed-Waveguide-Grating kann als optisches Mikrospektrometer verwendet werden, d. h. Eingangssignale unterschiedlicher Wellenlängen werden an unterschiedlichen Orten des Ausgangs abgebildet.

Das optische Eingangssignal wird dem planaroptischen Element 1 mittels eines Lichtwellenleiters 50 zugeführt, welcher mit einem optionalen Steckverbinder 51 versehen sein kann. Das Eingangssignal wird über den Wellenleiter 50 in den integrierten Wellenleiter 41 übertragen. Der Wellenleiter 41 leitet das Eingangssignal weiter zum freien Propagationsbereich 431 des Arrayed-Waveguide-Gratings 43. Der freie Propagationsbereich 431 hat eine in etwa dreieckige Grundfläche.

Am Ende des freien Propagationsbereiches 431 setzt eine Mehrzahl von Wellenleitern 432 an. Die Wellenleiter 432 weisen unterschiedliche Längen auf und führen das optische Eingangssignal vom Propagationsbereich 431 zum Interferenzbereich 433. Dort werden die verschiedenen Wellenlängen zur Interferenz gebracht. Am Ausgang des Interferenzbereiches 431 bildet sich ein Interferenzmuster, wobei unterschiedliche Wellenlängen an unterschiedlichen Orten abgebildet werden.

Jeweils an den Interferenzmaxima sitzen weitere Wellenleiter, welche das Ausgangssignal an den Ausgang des planaroptischen Elementes transportieren.

Die einzelnen Komponenten des Arrayed-Waveguide-Gratings 43 können beispielsweise durch ein Nanodruckverfahren in die erste Schicht 21 eingebracht werden. In anderen Ausführungsformen der Erfindung können die Komponenten durch Materialmodifikation mit einem Laser oder durch konventionelle Photolithografie in der ersten Schicht 21 erzeugt werden.

Ein konventioneller Polymerträger würde sich bei Änderung der Temperatur ausdehnen oder zusammenziehen, sodass sich die geometrischen Abmessungen des Arrayed-Waveguide-Gratings 43 verändern. Hierunter würde die Leistungsfähigkeit des Arrayed-Waveguide-Gratings 43 leiden. Durch die erfindungsgemäße Verstärkung des Substrates durch Nanodrähte 3, welche in der zweiten Schicht 22 und der optionalen dritten Schicht 23 angeordnet sind, kann eine hinreichende mechanische Stabilisierung des Trägers 2 erreicht werden, sodass das Arrayed-Waveguide-Grating 43 auch bei schwankenden Temperaturen stets die volle oder eine gegenüber bekannten Polymerträgern verbesserte Leistungsfähigkeit zeigt. Gleichzeitig bietet der Träger 2 aus einem Polymermaterial gegenüber bekannten Silicium-Substraten den Vorteil, dass auch sehr große Träger kostengünstig hergestellt werden können, sodass große photonische Komponenten oder viele photonische Komponenten kostengünstig hergestellt werden können. Ein Arrayed-Waveguide-Grating mit größeren Abmessungen kann verbesserte Kanalabstände aufweisen, welche beispielsweise mehr als 400 GHz, mehr als 600 GHz oder mehr als 1 THz betragen.

In gleicher Weise wie in Figur 1 für ein Arrayed-Waveguide-Grating 43 gezeigt, können zusätzliche oder andere photonische Komponenten auf dem Träger 2 angeordnet sein. Beispielsweise können Koppler, Faser-Bragg-Gitter, faseroptische Sensoren oder Wellenleiter und daraus abgeleitete Bauelemente in der ersten Schicht 21 erzeugt werden.

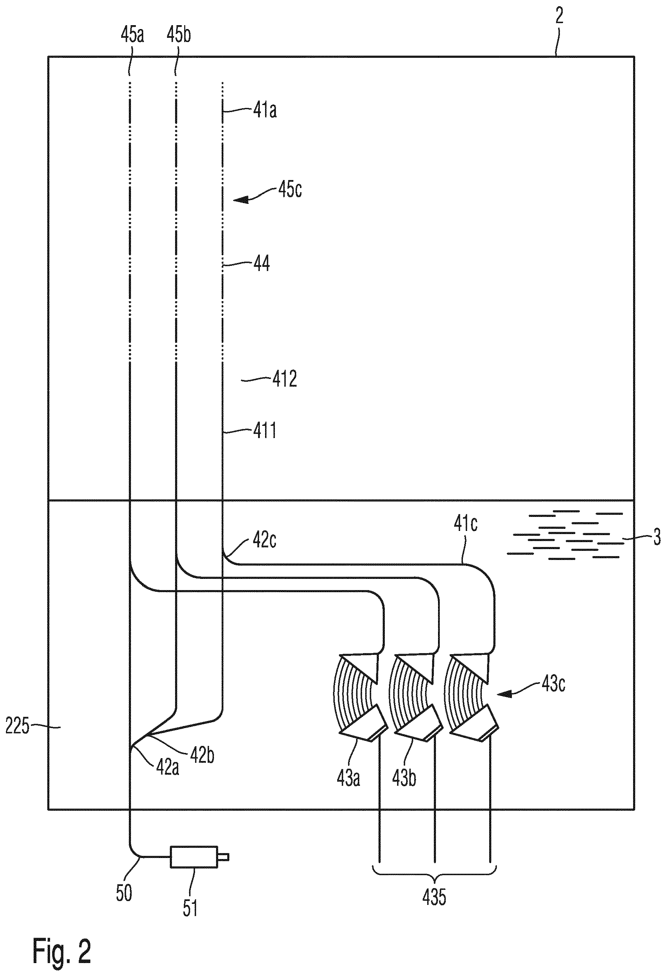

Figur 2 zeigt ein Ausführungsbeispiel eines Sensorelementes, welches auf einem Träger 2 angeordnet ist. Der Träger 2 kann aus zumindest zwei Schichten zusammengesetzt sein, wie vorstehend anhand von Figur 1 bereits erläutert wurde. Im Ausführungsbeispiel gemäß Figur 2 weist der Träger 2 eine Teilfläche 225 auf, welche mit Nanodrähten 3 verstärkt ist. Aus Gründen der Übersichtlichkeit sind nur einige wenige Nanodrähte 3 mit ihrer Orientierung dargestellt. Selbstverständlich können jedoch die Nanodrähte 3 die gesamte Teilfläche 225 einnehmen und in mehreren unterschiedlichen Orientierungen in einer oder mehreren Schichten angeordnet sein. Wesentlich ist lediglich, dass durch die Nanodrähte 3 für zumindest einen Temperaturbereich eine hinreichend kleine Ausdehnung erzielt wird, sodass die im Flächenbereich 225 angeordneten Komponenten durch einwirkende Kräfte und/oder Temperaturschwankungen nicht unzulässig beeinflusst werden.

Der verbleibende Flächenbereich des Trägers 2 ist mit faseroptischen Sensoren 45a, 45b und 45c versehen. Die Erfindung lehrt nicht die Verwendung von genau drei faseroptischen Sensoren 45. Vielmehr kann die jeweils gewählte Anzahl größer oder geringer sein und beispielsweise 1 bis etwa 50 betragen.

Jeder der faseroptischen Sensoren 45 weist einen Kern 411 auf, dessen Brechungsindex größer ist als der Brechungsindex der ersten Schicht 21 des Trägers 2. Hierdurch wird Licht im Kern 411 geführt, sodass sich ein Wellenleiter 41 ergibt. Im dargestellten Ausführungsbeispiel sind die Wellenleiter geradlinig angeordnet. Selbstverständlich können auch mäander- oder spiralförmige Anordnungen von zumindest einem Wellenleiter 41 realisiert werden.

Im Kern 411 des Wellenleiters 41 ist zumindest ein Faser-Bragg-Gitter 44 angeordnet. Im dargestellten Ausführungsbeispiel weist jeder Kern 41 sieben Faser-Bragg-Gitter 44 auf. In anderen Ausführungsformen der Erfindung kann die Anzahl größer oder geringer sein. Außerdem können in unterschiedlichen Wellenleitern 41 unterschiedliche Anzahlen von Faser-Bragg-Gittern 44 angeordnet sein.

Der Lichtwellenleiter 41 und/oder die Faser-Bragg-Gitter 44 können durch Lasermaterialbearbeitung und/oder Nanodrucken im Träger 2 erzeugt werden.

Da der Träger 2 im Bereich der faseroptischen Sensoren 45 keine stabilisierenden Nanodrähte enthält, ändert sich bei einwirkender Kraft und/oder Temperatur die Gitterkonstante der Faser-Bragg-Gitter 44. Hierdurch ändert sich das von den jeweiligen Gittern 40 reflektierte Spektrum.

Das jeweils von den Faser-Bragg-Gittern 44 reflektierte Licht wird durch das im Flächenbereich 225 angeordnete Spektrometer analysiert. Zur Erzeugung des optischen Signals 45 dient ein Anschlusswellenleiter 50 mit optionalem Steckverbinder 51, über welchen das Licht einer Superlumineszenzdiode oder eines durchstimmbaren Halbleiterlasers eingekoppelt werden kann. Das Licht wird durch zwei Koppler 42a und 42b auf drei optische Pfade aufgeweitet, welche jeweils an einem faseroptischen Sensor 45 angeschlossen sind.

Das von den Faser-Bragg-Gittern 44 reflektierte Licht wird über weitere Koppler 42c, 42d und 42e an drei Arrayed-Waveguide-Gratings 43a, 43b und 43c geleitet. Diese stellen an den Ausgangswellenleitern 435 ein optisches Signal zur Verfügung, welches in elektrische Signale gewandelt werden kann, beispielsweise über eine CCD-Zeile oder ein Photodiodenarray. Die Größe des optischen Signales ist somit ein Maß für die Intensität des vom jeweiligen Faser-Bragg-Gitter 44 reflektierten Lichtes und damit ein Maß für die am Ort des jeweiligen Gitters 44 herrschende Temperatur und/oder Kraft. Sofern auf den Bereich 225 dieselbe Temperatur einwirkt, bleibt das Spektrometer dennoch im Wesentlichen unbeeinflusst, da die Nanodrähte 3 eine mechanische Stabilisierung dieser Teilfläche des Trägers 2 bewirken.

Die Erfindung offenbart somit erstmalig die Integration eines faseroptischen Sensors und der zugehörigen Signalauslese auf einem Träger 2.

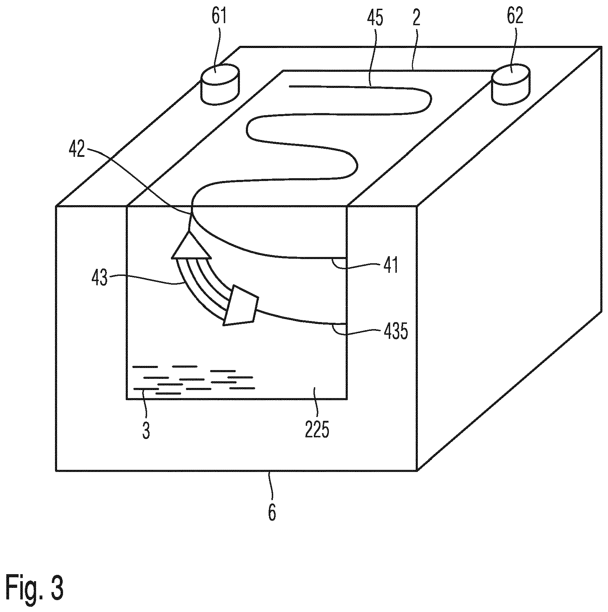

Figur 3 zeigt eine mögliche Anwendung des Sensorelementes aus Figur 2 bzw. des planaroptischen Elementes gemäß Figur 1. Figur 3 zeigt ein Batteriegehäuse 6, welches eine Mehrzahl von Batteriezellen enthalten kann, um eine Batterie mit vorgebbarer elektrischer Spannung und/oder einer vorgebbaren Stromlieferfähigkeit bereitzustellen. Das Batteriegehäuse 6 weist an seiner Außenseite zumindest zwei Anschlusskontakte 61 und 62 auf, über welche der Batterie Strom entnommen werden kann oder ein Ladestrom zugeführt werden kann.

Zur Überwachung der Temperatur der Batteriezellen im Gehäuse 6 kann ein faseroptischer Sensor 45 vorgesehen sein, welcher jeweils eine Mehrzahl von Faser-Bragg-Gittern 44 enthält, wie vorstehend anhand von Figur 2 beschrieben wurde. Das Batteriegehäuse 6 kann insoweit entsprechend ausgestaltet sein, dass die Temperatur der Batteriezellen am jeweiligen Ort des Faser-Bragg-Gitters 44 bestimmt werden kann. Der faseroptische Sensor 45 ist auf einem Träger 2 ausgebildet, welcher auf das Batteriegehäuse 6 aufgeklebt oder in das Material des Batteriegehäuses 6 eingebettet ist. Wie vorstehend beschrieben, weist der Träger 2 einen Flächenbereich 225 auf, welcher durch Nanodrähte 3 stabilisiert ist. In diesem Bereich befindet sich ein planaroptisches Spektrometer in Form eines Arrayed-Waveguide-Gratings 43. Das Licht zur Abfrage der jeweiligen Gitterkonstanten der Arrayed-Waveguide-Gratings 44 kann über den Wellenleiter 41 und den Koppler 42 eingekoppelt werden, wie vorstehend beschrieben. Somit erfordert das vorgeschlagene Sensorelement lediglich den Anschluss einer Lichtquelle und einer elektronischen Auswerteschaltung, um die Temperatur einer Mehrzahl von Batteriezellen zu überwachen. Das Sensorelement und das zur Auslese benötigte Spektrometer kann auf dem Träger 2 im Material des Gehäuses 6 eingebettet sein, sodass sich ein mechanisch robuster Aufbau bietet, welcher auch rauhe Einsatzbedingungen schadlos übersteht, wie sie in Fahrzeugen auftreten können. Weiterhin sind die verwendeten Materialien preisgünstig herstellbar, sodass ein Einsatz auf dem Massenmarkt problemlos möglich ist.

Selbstverständlich ist die Erfindung nicht auf die in den Figuren dargestellten Ausführungsformen beschränkt. Die vorstehende Beschreibung ist nicht als beschränkend, sondern als erläuternd anzusehen. Merkmale unterschiedlicher Ausführungsbeispiele sind untereinander kombinierbar. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Planaroptisches Element (1) mit zumindest einer photonischen Komponente (4), welche in zumindest einem Träger (2) angeordnet ist, **dadurch gekennzeichnet, dass** der Träger (2) zumindest eine erste Folienlage (21) mit einer ersten Seite (211) und einer gegenüberliegenden zweiten Seite (212) und eine zweite Folienlage (22) mit einer ersten Seite (221) und einer gegenüberliegenden zweiten Seite (222) aufweist, wobei die erste Folienlage (21) und die zweite Folienlage jeweils zumindest ein Polymer enthält oder daraus besteht und die erste Seite (221) der zweiten Folienlage (22) auf der zweiten Seite (212) der ersten Folienlage (21) angeordnet ist, wobei die zweite Folienlage (22) in zumindest einer Teilfläche (225) Nanodrähte (3) enthält, welche Zinkoxid enthalten oder daraus bestehen und welche einen Durchmesser von etwa 100 nm bis etwa 1000 nm aufweisen und wobei die photonische Komponente (4) in der ersten Folienlage (21) angeordnet ist.

2. Planaroptisches Element nach Anspruch 1, **dadurch gekennzeichnet, dass** die Nanodrähte (3) eine Länge von etwa 1 µm bis etwa 10 µm aufweisen.

3. Planaroptisches Element nach Anspruch 1 oder 2, **dadurch gekennzeichnet, dass** die erste Folienlage (21) weiterhin Nanopartikel enthält.

4. Planaroptisches Element nach Anspruch 3,
**dadurch gekennzeichnet, dass** die Nanopartikel TiO₂ und/oder ZnO und/oder SiO₂ enthalten oder daraus bestehen.

5. Planaroptisches Element nach einem der Ansprüche 1 bis 4, **dadurch gekennzeichnet, dass** die photonische Komponente (4) in der ersten Folienlage ausgewählt ist aus zumindest einem Wellenleiter (41) und/oder zumindest einem Koppler (42) und/oder zumindest einem Arrayed-Waveguide-Grating (43) und/oder zumindest einem Faser-Bragg-Gitter (44) und/oder zumindest einem faseroptischen Sensor (45).

6. Planaroptisches Element nach einem der Ansprüche 1 bis 5, weiterhin enthaltend eine dritte Folienlage (23) mit einer ersten Seite (231) und einer gegenüberliegenden zweiten Seite (232), wobei die dritte Folienlage (23) zumindest in einer Teilfläche (225) Nanodrähte (3) enthält.

7. Planaroptisches Element nach einem der Ansprüche 1 bis 6, **dadurch gekennzeichnet, dass** die Nanodrähte (3) eine vorgebbare Orientierung aufweisen.

8. Verfahren zur Herstellung eines planaroptischen Elementes (1), enthalten die folgenden Schritte:
- Bereitstellen einer ersten Folienlage (21) mit einer ersten Seite (211) und einer gegenüberliegenden zweiten Seite (212), wobei die erste Folienlage (21) ein Polymer enthält;
- Bereitstellen einer zweite Folienlage (22) mit einer ersten Seite (221) und einer gegenüberliegenden zweiten Seite (222), wobei die zweite Folienlage (22) ein Polymer und in zumindest einer Teilfläche (225) Nanodrähte (3) enthält, welche Zinkoxid enthalten oder daraus bestehen und welche einen Durchmesser von etwa 100 nm bis etwa 1000 nm aufweisen,
- Verbinden der ersten Seite (221) der zweiten Folienlage (22) mit der zweiten Seite (212) der ersten Folienlage (21),
- Erzeugen zumindest einer photonischen Komponente (4) in der ersten Folienlage (21) durch Materialmodifikation durch Laserstrahlung und/oder Nanodrucken und/oder Photolithographie, wobei
- die photonische Komponente (4) in der ersten Folienlage (21) ausgewählt ist aus zumindest einem Wellenleiter (41) und/oder zumindest einem Koppler (42) und/oder zumindest einem Arrayed-Waveguide-Grating (43) und/oder zumindest einem Faser-Bragg-Gitter (44) und/oder zumindest einem faseroptischen Sensor (45).

9. Verfahren nach Anspruch 8, weiterhin enthaltend die folgenden Schritte:
- Bereitstellen einer dritten Folienlage (23) mit einer ersten Seite (231) und einer gegenüberliegenden zweiten Seite (232), wobei die dritte Folienlage (23) in zumindest einer Teilfläche (225) Nanodrähte (3) enthält
- Laminieren der ersten Seite (231) der dritten Folienlage (23) auf die zweite Seite (222) der zweiten Folienlage (22).

10. Verfahren nach Anspruch 8 oder 9, wobei die erste Folienlage (21) weiterhin Nanopartikel enthält oder wobei die erste Folienlage (21) weiterhin Nanopartikel enthält, welche TiO₂ und/oder ZnO und/oder SiO₂ enthalten oder daraus bestehen.

11. Verfahren nach einem der Ansprüche 8 bis 10, wobei die Nanodrähte (3) eine vorgebbare Orientierung aufweisen.

12. Verfahren nach einem der Ansprüche 8 bis 11, wobei die Nanodrähte (3) eine Länge von etwa 1 µm bis etwa 10 µm aufweisen.

## Claims

1. Planar optical element (1) having at least one photonic component (4), which is arranged in at least one substrate (2), **characterized in that** the substrate (2) includes at least a first film layer (21) having a first side (211) and an opposite second side (212) and a second film layer (22) having a first side (221) and an opposite second side (222), the first film layer (21) and the second film layer each containing or consisting of at least one polymer and the first side (221) of the second film layer (22) being arranged on the second side (212) of the first film layer (21), at least a sub-surface (225) of the second film layer (22) containing nanowires (3) which contain or consist of zinc oxide and have a diameter of about 100 nm to about 1000 nm and the photonic component (4) being arranged in the first film layer (21).

2. Planar optical element according to claim 1, **characterized in that** the nanowires (3) have a length of about 1 µm to about 10 µm.

3. Planar optical element according to claim 1 or 2, **characterized in that** first film layer (21) further contains nanoparticles.

4. Planar optical element according to claim 3, **characterized in that** the nanoparticles contain or consist of TiO₂ and/or ZnO and/or SiO₂.

5. Planar optical element according to any one of claims 1 to 4, **characterized in that** the photonic component (4) in the first film layer is selected from at least one waveguide (41) and/or at least one coupler (42) and/or at least one arrayed waveguide grating (43) and/or at least one fiber Bragg grating (44) and/or at least one fiber-optic sensor (45).

6. Planar optical element according to any one of claims 1 to 5, further containing a third film layer (23) having a first side (231) and an opposite second side (232), wherein at least a sub-surface (225) of the third film layer (23) contains nanowires.

7. Planar optical element according to any one of claims 1 to 6, **characterized in that** the nanowires (3) have a predeterminable orientation.

8. Method for producing a planar optical element (1) containing the steps of:
- providing a first film layer (21) having a first side (211) and an opposite second side (212), the first file layer (21) containing a polymer;
- providing a second film layer (22) having a first side (221) and an opposite second side (222), the second film layer (22) containing a polymer and, in at least a sub-surface (225), nanowires (3) which contain or consist of zinc oxide and have a diameter of about 100 nm to about 1000 nm,
- connecting the first side (221) of the second film layer (22) to the second side (212) of the first film layer (21),
- producing at least one photonic component (4) in the first film layer (21) by modifying the material using layer radiation and/or nanoprinting and/or photolithography, wherein
- the photonic component (4) in the first film layer (21) is selected from at least one waveguide (41) and/or at least one coupler (42) and/or at least one arrayed waveguide grating (43) and/or at least one fiber Bragg grating (44) and/or at least one fiber-optic sensor (45).

9. Method according to claim 8, further containing the steps of:
- providing a third film layer (23) having a first side (231) and an opposite second side (232), wherein at least a sub-surface (225) of the third film layer (23) contains nanowires (3),
- laminating the first side (231) of the third film layer (23) to the second side (222) of the second film layer (22).

10. Method according to claim 8 or 9, wherein the first film layer (21) further contains nanoparticles or wherein the first film layer (21) further includes nanoparticles which contain or consist of TiO₂ and/or ZnO and/or SiO₂.

11. Method according to any one of claims 8 to 10, wherein the nanowires (3) have a predeterminable orientation.

12. Method according to any one of claims 8 to 11, wherein the nanowires (3) have a length of about 1 µm to about 10 µm.

## Revendications

1. Elément optique planaire (1) comprenant au moins un composant photonique (4) disposé dans au moins un support (2),
**caractérisé en ce que**
le support (2) présente au moins une première couche de film (21) avec une première face (211) et une deuxième face opposée (212) et une deuxième couche de film (22) avec une première face (221) et une deuxième face opposée (222), la première couche de film (21) et la deuxième couche de film contenant ou consistant chacune en au moins un polymère, et la première face (221) de la deuxième couche de film (22) étant disposée sur la deuxième face (212) de la première couche de film (21), la deuxième couche de film (22) contenant, dans au moins une surface partielle (225), des nanofils (3) qui contiennent ou consistent en oxyde de zinc et qui présentent un diamètre d'environ 100 nm à environ 1000 nm, et le composant photonique (4) étant disposé dans la première couche de film (21).

2. Elément optique planaire selon la revendication 1,
**caractérisé en ce que** les nanofils (3) ont une longueur d'environ 1 µm à environ 10 µm.

3. Elément optique planaire selon la revendication 1 ou 2,
**caractérisé en ce que** la première couche de film (21) contient en outre des nanoparticules.

4. Elément optique planaire selon la revendication 3,
**caractérisé en ce que** les nanoparticules contiennent ou consistent en TiO₂ et/ou ZnO et/ou SiO₂.

5. Elément optique planaire selon l'une des revendications 1 à 4, **caractérisé en ce que** le composant photonique (4) dans la première couche de film est choisi parmi au moins un guide d'ondes (41) et/ou au moins un coupleur (42) et/ou au moins un réseau de guides d'ondes (43) et/ou au moins un réseau de Bragg à fibre (44) et/ou au moins un capteur à fibre optique (45).

6. Elément optique planaire selon l'une des revendications 1 à 5, contenant en outre une troisième couche de film (23) avec une première face (231) et une deuxième face opposée (232), la troisième couche de film (23) contenant des nanofils (3) au moins dans une surface partielle (225).

7. Elément d'optique planaire selon l'une des revendications 1 à 6, **caractérisé en ce que** les nanofils (3) présentent une orientation prédéfinissable.

8. Procédé de fabrication d'un élément optique planaire (1),
comprenant les étapes suivantes consistant à :
- fournir une première couche de film (21) avec une première face (211) et une deuxième face opposée (212), la première couche de film (21) contenant un polymère ;
- fournir une deuxième couche de film (22) avec une première face (221) et une deuxième face opposée (222), la deuxième couche de film (22) contenant un polymère et, dans au moins une surface partielle (225), des nanofils (3) qui contiennent ou consistent en oxyde de zinc et qui présentent un diamètre d'environ 100 nm à environ 1000 nm,
- relier la première face (221) de la deuxième couche de film (22) à la deuxième face (212) de la première couche de film (21),
- réaliser au moins un composant photonique (4) dans la première couche de film (21) par modification du matériau par rayonnement laser et/ou nano-impression et/ou photolithographie,
- le composant photonique (4) dans la première couche de film (21) étant choisi parmi au moins un guide d'ondes (41) et/ou au moins un coupleur (42) et/ou au moins un réseau de guides d'ondes (43) et/ou au moins un réseau de Bragg à fibres (44) et/ou au moins un capteur à fibre optique (45).

9. Procédé selon la revendication 8,
comprenant en outre les étapes suivantes consistant à :
- fournir une troisième couche de film (23) avec une première face (231) et une deuxième face opposée (232), la troisième couche de film (23) contenant des nanofils (3) dans au moins une surface partielle (225),
- stratifier la première face (231) de la troisième couche de film (23) sur la deuxième face (222) de la deuxième couche de film (22).

10. Procédé selon la revendication 8 ou 9,
dans lequel la première couche de film (21) contient en outre des nanoparticules ou la première couche de film (21) contient en outre des nanoparticules qui contiennent ou consistent en TiO₂ et/ou ZnO et/ou SiO₂.

11. Procédé selon l'une des revendications 8 à 10,
dans lequel les nanofils (3) présentent une orientation prédéfinissable.

12. Procédé selon l'une des revendications 8 à 11,
dans lequel les nanofils (3) ont une longueur d'environ 1 µm à environ 10 µm.
